# EUROPEAN PATENT SPECIFICATION

(11) **EP 4 549 534 B1**
(45) Date of publication and mention of the grant of the patent: **05.08.2026**
(21) Application number: 24200990.0
(22) Date of filing: 18.09.2024
(51) Int. Cl.: C10B 53/07, C10G 1/10

(54) **CONTINUOUS PYROLYSIS METHOD OF WASTE PLASTIC AND PYROLYSIS SYSTEM OF WASTE PLASTIC**
KONTINUIERLICHES PYROLYSEVERFAHREN FÜR KUNSTSTOFFABFÄLLE UND PYROLYSESYSTEM FÜR KUNSTSTOFFABFÄLLE
PROCÉDÉ DE PYROLYSE EN CONTINU DE DÉCHETS PLASTIQUES ET SYSTÈME DE PYROLYSE DE DÉCHETS PLASTIQUES

(30) Priority: 30.10.2023 CN 202311420923
(43) Date of publication of application: 07.05.2025
(73) Proprietor: Green Harvest Energy (Beijing) Technology Co., Ltd., Beijing 100073 (CN)
(72) Inventor: JIANG, Yinghan, Beijing, 100073 (CN); SUN, Baolin, Beijing, 100073 (CN); QI, Hongmin, Beijing, 100073 (CN)
(74) Representative: Porta & Consulenti Associati S.p.A.

(56) References cited:
- US-A1- 2013 256 113
- US-A1- 2022 325 185

## Description

### TECHNICAL FIELD

The present disclosure relates to the field of resource utilization of waste plastic, in particular to a continuous pyrolysis method of waste plastic, and a pyrolysis system of waste plastic.

### BACKGROUND

Plastic products have become the necessities in daily life of human, including packaging boxes, plastic bags, electronic protective cases and so on. With the increasing number and variety of plastic products, the treatment of waste plastic products, especially resource treatment, has gradually become the focus of environmental governance. At present, most of the waste plastic is treated by incineration, landfilling, or ocean dumping. However, these methods will eventually lead to new pollution problems.

In order to turn waste plastic into valuable things, high temperature cracking/pyrolysis of waste plastic has gradually attracted attention. It has been reported that there are various problems in the pyrolysis of plastic due to its light weight and low melting point. For example, the melt is adhered to and accumulated on the pyrolysis device during pyrolysis, which leads to frequent failures of the pyrolysis device and makes the pyrolysis device difficult to operate continuously for a long time. Due to the defects of structural design, the pyrolysis device is prone to coking, which leads to the decrease of heat transfer efficiency of pyrolysis, and insufficient pyrolysis leads to low yield of pyrolysis oil and gas, and poor quality of pyrolysis products.

The documents US 2022/325185 A1 and US 2013/256113 A1 disclose pyrolysis methods and systems according to the state of the art.

### SUMMARY

For the disadvantages in the prior art, the present disclosure provides a continuous pyrolysis system and corresponding method of waste plastic, as defined in particular by the appended independent claims 1 and 6, respectively.

In an embodiment, an included angle between the stirring rod and the rotating shaft is 30-90 degrees.

In an embodiment, on the rotating shaft, a vertical distance between two adjacent stirring rods on the rotating shaft is 1.5-3 times a length of the scraping plate.

In an embodiment, the pyrolysis system includes two or more stages of pyrolysis units, two adjacent stages of pyrolysis units are in closed communication, and the separation unit communicates with the last stage of pyrolysis unit.

In an embodiment, each stage of pyrolysis unit is provided with an independent flue gas channel, and the flue gas channels of two adjacent stages of pyrolysis units are in communication.

According to the continuous pyrolysis method of the waste plastic and a pyrolysis system of waste plastic provided by the present disclosure, a continuous and stable operation can be kept for a long period of time, the temperature of pyrolysis reaction can be kept stable for a period of up to 60 days, and the amplitude of temperature fluctuation is lower than 100°C. Therefore, the quality of the pyrolysis product is greatly improved, and the cost of equipment maintenance and frequent maintenance and debugging is reduced.

### BRIEF DESCRIPTION OF THE DRAWINGS

FIG. 1 is a front view of a pyrolysis reactor.
FIG. 2 is a sectional view of a pyrolysis reactor.
FIGS. 3A-3C are schematic sectional diagram of stirring rods arranged on a rotating shaft in a pyrolysis reactor, where FIG. 3A is a schematic sectional diagram showing that an included angle between the stirring rods is 180 degrees; FIG. 3B is a schematic sectional diagram showing that an included angle between the stirring rods is 120 degrees; and FIG. 3C is a schematic sectional diagram showing that an included angle between the stirring rods is 90 degrees.
FIG. 4 is a schematic sectional diagram of an exemplary pyrolysis reactor.
FIG. 5 is a structural diagram of a spiral reactor.

In the drawings: 1-pyrolysis reactor; 11-feed port; 12-pyrolysis solid outlet; 2-rotating shaft; 3-stirring rod; 4-scraping plate; 5-counterweight.

### DETAILED DESCRIPTION OF THE EMBODIMENTS

The present disclosure is further described below with reference to accompanying drawings.

A continuous pyrolysis method of waste plastic provided by the present disclosure includes the following steps:
the waste plastic is crushed and dried, and then subjected to pyrolysis reaction under an oxygen-free condition to obtain pyrolysis products, where the obtained pyrolysis products include pyrolysis oil and gas, and a pyrolysis solid. According to the continuous pyrolysis method of the waste plastic, in the operation process, a temperature of the pyrolysis reaction can be kept stable in the range of 450-500 within the operation time of more than 60 days, and even the temperature of the pyrolysis reaction can be kept stable in the range of 450-500 within the operation time of 20 days.

According to the present disclosure, pyrolysis reaction time of the waste plastic ranges from 30 min to 40 min.

According to the continuous pyrolysis method of waste plastic, the waste plastic can be uniformly and sufficiently pyrolyzed since the pyrolysis reaction temperature is relatively stable, and small in amplitude of fluctuation, and a proportion of obtained pyrolysis solid in the pyrolysis products is greatly reduced, thereby improving the quality of the pyrolysis product. In some embodiments, the proportion of the pyrolysis solid in the pyrolysis products is less than 20% by weight, even less than 19% by weight, more preferably less than 16% by weight, and even more preferably less than 15% by weight.

In the present disclosure, before the pyrolysis process, the waste plastic is preferably dried to make the moisture content of the waste plastic less than 5% by weight. High moisture content in the waste plastic will affect the energy consumption of the pyrolysis unit, and the higher the moisture content, the higher the energy consumption. In order to avoid the high energy consumption of the reactor, it is preferable to dry the waste plastic to make the moisture content thereof less than 3% by weight.

The continuous pyrolysis method provided by the present disclosure is suitable for various types of waste plastic, for example, the waste plastic may be gift packaging boxes, soft packaging of electronic products, and plastic containers; the waste plastic may be thermoplastic or thermosetting plastic. The types of plastic in the waste plastic may be polyolefin, polystyrene, polyamide, polyether, polyester and polyacrylic acid, etc. The plastic content may be greater than 60% by weight. If the plastic content in the waste plastic is less than 60% by weight, a front-end sorting unit needs to be added.

### Pyrolysis system

A continuous pyrolysis method of waste plastic provided by the present disclosure is implemented through the claimed pyrolysis system. The pyrolysis system includes a feeding unit, a pyrolysis unit for pyrolysis reaction, and a separation unit for pyrolysis product separation. The feeding unit, the pyrolysis unit and the separation unit are connected in turn. A discharge port of the feeding unit is hermetically connected to a feed port of the pyrolysis unit, a pyrolysis product outlet of the pyrolysis unit communicates with the separation unit, and the separation unit is used to separate pyrolysis oil and gas from a pyrolysis solid.

The pyrolysis unit includes a pyrolysis reactor, and a flue gas channel arranged around an outer wall of the pyrolysis reactor. The flue gas channel is used for circulating a hot flue gas, thus providing a heat source for the pyrolysis reactor.

The flue gas channel is provided with a flue gas inlet, and a flue gas outlet. The flue gas inlet is arranged on a feed port side of the pyrolysis reactor, and the flue gas outlet is arranged on a pyrolysis product outlet side of the pyrolysis reactor.

A stirring assembly is arranged in an inner cavity of the pyrolysis reactor, and the stirring assembly is in tangential contact with an inner wall of the pyrolysis reactor when rotating.

In the present disclosure, the tangential contact refers to that the stirring assembly is in linear contact, or even surface contact, with an inner wall of the pyrolysis reactor when rotating and stirring, thus scrapping attachments on the inner wall of the pyrolysis reactor.

In an embodiment, the degree of tangential contact is at least as follows: the stirring assembly continues to make contact with the inner wall of the pyrolysis reactor within a rotation angle of 360 degrees, at least within 30 degrees, at least within 60 degrees, at least within 180 degrees, or even within 360 degrees.

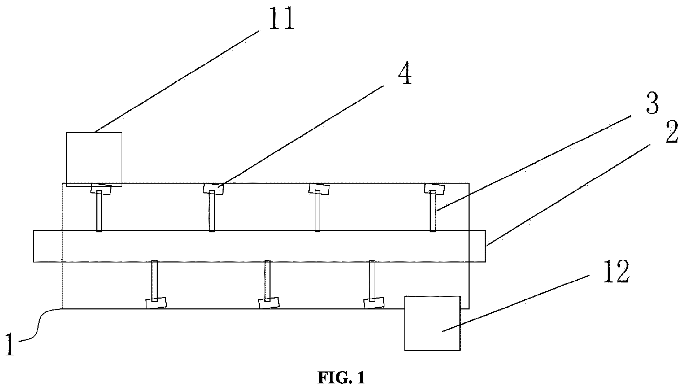

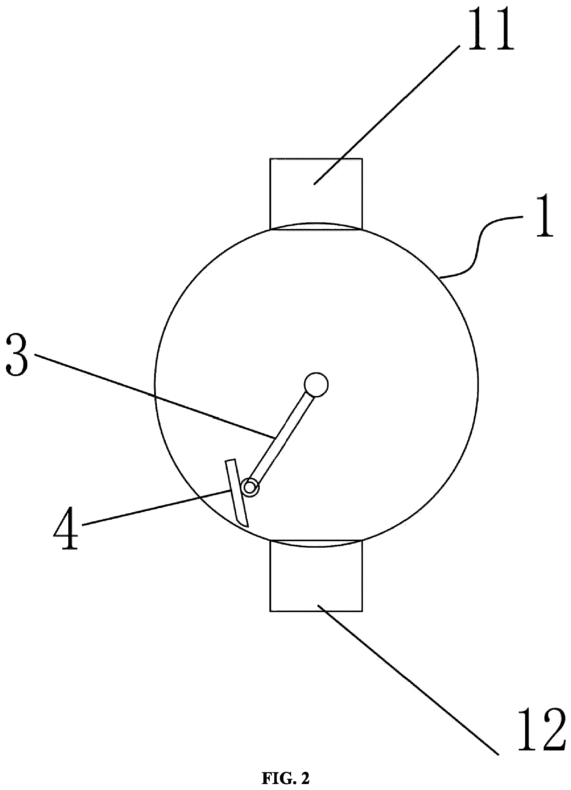

In an embodiment, as shown in FIG. 1 and FIG. 2, FIG. 1 is a front view of a pyrolysis reactor, and FIG. 2 is a sectional view of a pyrolysis reactor.

As shown in FIG. 1, the pyrolysis reactor 1 is provided with a feed port 11 for inputting the waste plastic, a pyrolysis solid outlet 12, a pyrolysis gas outlet (not shown). The stirring assembly includes a rotating shaft 2, and multiple stirring rods 3 arranged on the rotating shaft. The rotating shaft is arranged on a central line of the pyrolysis reactor along a length of the pyrolysis rector 1. One end of the stirring rod 3 is fixedly connected to the rotating shaft 2, and the other end of the stirring rod is connected to a scraping plate 4. The scraping plate 4 may rotate at an end of the stirring rod 3 to achieve tangential contact with the inner wall of the pyrolysis reactor.

In an embodiment of the present disclosure, an included angle between the stirring rod and the rotating shaft is 45-90 degrees, preferably 75-85 degrees.

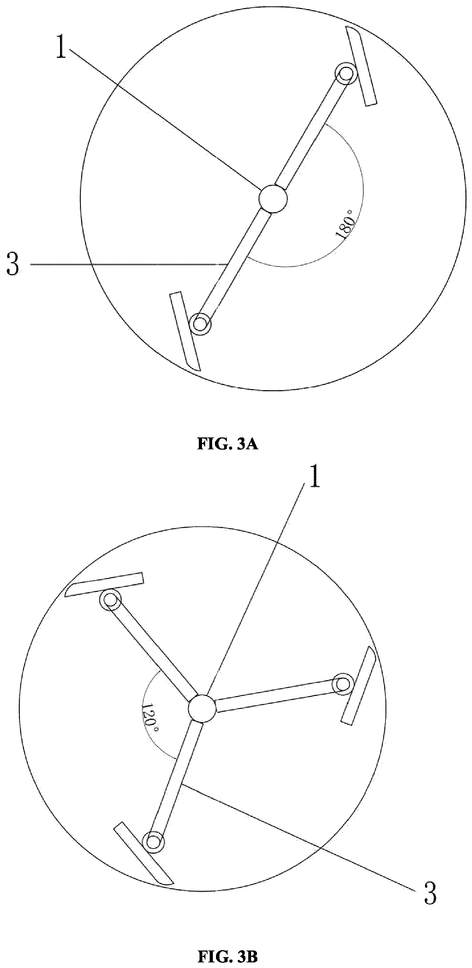

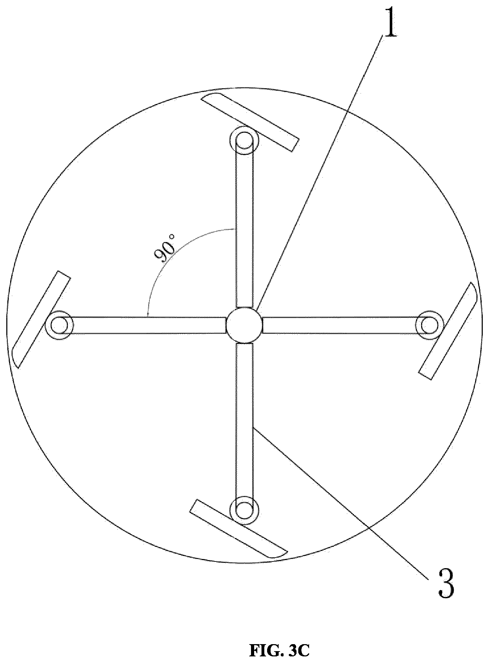

In an embodiment of the present disclosure, multiple stirring rods are equidistantly and uniformly arranged on the rotating shaft, and included angles between the stirring rods and the rotating shaft are the same. Alternatively, as shown in FIGS. 3A-3C, in a circumferential direction of the rotating shaft 1, an included angle between the stirring rods 3 may be 60 degrees and more, e.g., 180 degrees (FIG. 3A), 120 degrees (FIG. 3B), and 90 degrees (FIG. 3C).

In an embodiment of the present disclosure, in order to effectively remove attachments on the inner wall, especially a coking material, a vertical distance between two adjacent stirring rods on the rotating shaft is 0.5-1 times a length of the scraping plate.

The scraping plate can rotate at the end of the stirring rod. In addition, "rotating at the end of the stirring rod" refers to that the scraping plate rotates at the end of the stirring rod when subjected to a friction force or resistance, rather than displacing in the length direction of the stirring rod.

In an embodiment, the stirring rod is connected to the scraping plate by a conventional sleeve. As an example, a movable inner tube is perpendicularly fixed to one end, away from the rotating shaft, of the stirring rod, a movable outer tube is sleeved outside and rotatably connected both ends of the movable inner tube, and the scraping plate is fixed to the outside of the movable outer tube. The scraping plate can rotate at the end of the stirring rod under the mechanism action of the movable outer tube and the movable inner tube.

In order to achieve the tangential contact between the scraping plate and the inner wall of the pyrolysis reactor, as an example, one end, in contact with the pyrolysis reactor, of the scraping plate is an arc, the arc can be in fit with the inner wall of the pyrolysis reactor, thus making linear contact, even surface contact, with the pyrolysis reactor.

The shape of the scraping plate is a long-strip plate, and both ends of the scraping plate have different weights. The length of the scraping plate can be adjusted according to the length of the pyrolysis reactor. In an embodiment, the length of the scraping plate is that an arc end of the scraping plate is at an angle of 45-60 degrees when making tangential contact with the inner wall of the pyrolysis reactor.

The scraping plate may have a width, and the width of the scraping plate should not be too large or too small. Excessive width of the scraping plate will increase the rotation resistance of the scraping plate, which is conducive to the smooth rotation of the scraping plate for a long time. Small width of the scraping plate will make the contact area with the pyrolysis reactor smaller, which will affect the scraping efficiency. In the present disclosure, the width of the scraping plate may be 2-15 cm, preferably 8-15 cm. In addition, in order to achieve better scraping effect, the total width of the scraping plates in the length direction of the pyrolysis reactor is 0.6-0.9 times the length of the pyrolysis reactor, more preferably 0.7-0.8 times.

As an example, a counterweight is fixed to a panel of the scraping plate, which makes both ends of the scraping plate have different weights and is used for controlling the rotation opportunity of the scraping plate. The counterweight can be fixed to a panel, facing the inner wall of the pyrolysis reactor, of the scraping plate, or a panel facing the stirring rod. A fixation position of the counterweight on a single scraping plate can be arranged independently, thus controlling the rotation opportunity of the single scraping plate. The sufficient scrapping of the attachments on the inner wall of the pyrolysis reactor can be achieved through the rotating scraping behavior of multiple scraping plates.

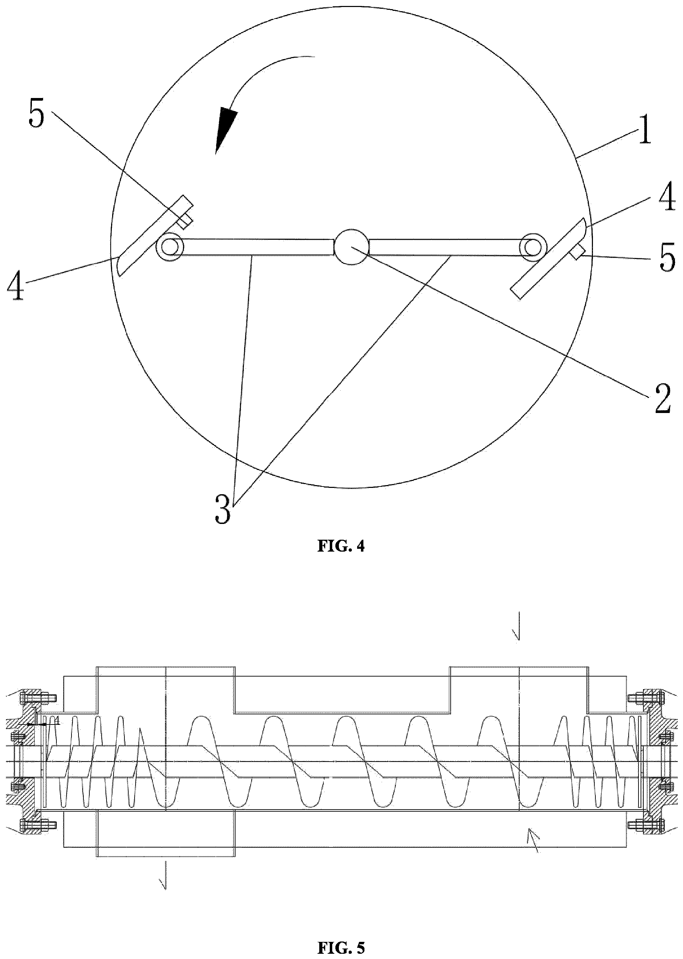

As an example of the stirring assembly, in the pyrolysis reactor 1 shown in FIG. 4, an included angle between the stirring rods 3 in a circumferential direction of the rotating shaft 2 is 180 degrees, the counterweight 5 is arranged on each scraping plate 4, and an arc sharp end in the arc end of the scraping plate faces a rotating direction of the rotating shaft 2. A position of the counterweight 5 is that all stirring rods 3 are located on a same horizontal line in the circumferential direction of the rotating shaft 2, the counterweight blocks 5 are at the same side of the horizontal line. Therefore, when the scraping plates 4 are in contact with the inner wall of the pyrolysis reactor for scraping, the counterweights 5 can play a synergistic unbalanced role, making the scraping plates 4 achieve a synergistic scraping effect.

As a preferred embodiment of the stirring assembly, two stirring rods are arranged on the same circumferential section of the rotating shaft, and the two stirring rods are at an angle of 180 degrees, a tail end of each stirring rod is provided with one scraping plate, and the scraping plates have the same width. When the waste plastic undergoes the pyrolysis reaction, most of the waste plastic is located at the bottom of the pyrolysis reactor, and the attachments on the inner wall are basically located at the bottom of the pyrolysis reactor. When the stirring assembly operates, two horizontally arranged scraping plates can couple with each other to scrape the bottom of the pyrolysis reactor alternately, thus achieving a more sufficient scraping effect.

The volume of the counterweight should not be too large or too small. If the volume of the counterweight is too large, the space between the scraping plate and the connecting rod will be occupied, which will affect the rotation angle of the scraping plate. If the volume of the counterweight is too small, it is difficult to control the rotation angle of the scraping plate in a suitable range. In the present disclosure, the height that the counterweight is higher than the panel of the scraping plate may be 1-3 cm, such as 2 cm.

As the waste plastic of the present disclosure is light in weight, in a molten state after pyrolysis, and viscous. When waste plastic undergoes pyrolysis reaction in the pyrolysis reactor, molten materials are easy to adhere to the stirring assembly, and the pyrolysis products are easy to adhere to and accumulate on the inner wall of the pyrolysis reactor when the pyrolysis products cannot be removed in time, leading to influence on the stability of the pyrolysis temperature. In the present disclosure, a thickness of the scraping plate needs to be controlled within 6-10 mm. Excessive thickness of the scraping plate will lead to large rotation resistance of the rotating shaft, and small thickness of the scraping plate will affect scraping strength.

In an embodiment of the present disclosure, a weight w₁ of the scraping plate, a weight w₂ of the counterweight, a width m of the scraping plate and a distance L from the counterweight to the axis of rotation of the scraping plate satisfy the following relationship: (w₂×L+0.5w₁× 0.5m)/(0.5w₁× 0.5m) = 2-3.

In an embodiment, the weight w₁ of the scraping plate is equal to 7612 g, the weight w₂ of the counterweight is equal to 3806 g, the width m of the scraping plate is equal to 8 cm, and the distance L from counterweight to the axis of rotation of the scraping plate is equal to 8 cm.

According to the continuous pyrolysis method of waste plastic provided by the present disclosure, the pyrolysis efficiency of the waste plastic may reach 0.1-1 t/h.

In an embodiment, the heat required for the pyrolysis reaction in the present disclosure comes from indirect heating of a hot flue gas. In this embodiment, an outer wall of the pyrolysis reactor is provided with a flue gas channel for conveying the hot flue gas. A flow direction of the hot flue gas is opposite to a conveying direction of the waste plastic in the pyrolysis reactor. The flue gas channel is provided with a flue gas inlet, and a flue gas outlet. In order to ensure that the temperature of the pyrolysis reaction reaches 450-500°C, a temperature at the flue gas inlet can be controlled at 700-800°C, and a temperature at a flue gas outlet can be controlled at 300-400°C, for example, the temperature at the flue gas outlet can be controlled at 350-400°C. A temperature sensor is arranged at the flue gas outlet for monitoring the temperature at the flue gas outlet. When the temperature fluctuation at the flue gas outlet reaches 100°C and above, the pyrolysis reaction is stopped. Generally, the hot flue gas is generated by gas combustion. In an embodiment, the flow rate of the flue gas can be controlled at 2000-3200 Nm³/h.

The pyrolysis system provided by the present disclosure is used for continuous pyrolysis of the waste plastic, and the temperature fluctuation at the flue gas outlet is kept below 100 °C, even below 50°C, below 30°C and below 25°C during the continuous operation for more than 30 days, 40 days, 50 days and 60 days, and the temperature at the flue gas outlet remains unchanged during the continuous operation for more than 10 days. The proportion of the pyrolysis solid in pyrolysis products is less than 20% by weight, even less than 19% by weight, more preferably less than 16% by weight, and even more preferably less than 15% by weight, thus acquiring the pyrolysis products with excellent quality.

In a specific embodiment, the specification of the pyrolysis reactor may be any size, for example, an inner diameter is 1.2 m, and a length is 9 m.

In an embodiment, at least two stirring rods are arranged on the same circumferential section of the rotating shaft as a group, each stirring rod is provided with a scraping plate, and the width of each scraping plate is 15-20 cm. 40-60 groups of stirring rods can be arranged on the rotating shaft.

In an embodiment, the pyrolysis treatment capacity of the pyrolysis system for the waste plastic can reach 0.8-1.5 t/h, for example, 1 t/h.

The pyrolysis method and system provided by the present disclosure are used to continuously pyrolyze the waste plastic, the proportion of the obtained pyrolytic solid in the pyrolysis products may be less than 25% by weight, even less than 22% by weight, and even less than 20% by weight.

The pyrolysis system is used to continuously pyrolyze the waste plastic, the filling degree of materials in the pyrolysis reactor can reach 20%-60% by volume, and the inner wall of the pyrolysis reactor can be kept basically free of attachments at the rotating speed of 2-5 r/min, and the thickness of the attachment is less than 1 mm.

In an embodiment, the filling degree of materials in the pyrolysis reactor is 20% by volume, such as 40% by volume, 60% by volume, and 80% by volume.

In an embodiment, the rotating speed of the rotating shaft may be 2-5 r/min.

The waste plastic is pyrolyzed by the pyrolysis system provided by the present disclosure, and the thickness of the attachment on the inner wall of the pyrolysis reactor may be below 0.5 mm, or below 0.8 mm.

The pyrolysis system may include two or more stages of pyrolysis units, two adjacent stages of pyrolysis units are in closed communication, and the separation unit communicates with the last stage of pyrolysis unit.

In some embodiments, each stage of pyrolysis unit is provided with an independent flue gas channel, and the flue gas channels of two adjacent stages of pyrolysis units are in communication.

The present disclosure is described below in detail with reference to embodiments.

The waste plastic treated in the following embodiments and comparative examples is a waste agricultural film, with a PE content of 90% by weight, and a moisture content of the waste agricultural film is 5% by weight after crushing and drying.

### Embodiment

The waste plastic is continuously fed into the pyrolysis reactor by a closed screw conveyor, and the feeding rate is controlled at 0.1 t/h.

The hot flue gas is used to heat the pyrolysis reactor indirectly, that is, the flue gas is isolated from the waste plastic in the pyrolysis reactor. The flue gas quantity is 3200 Nm³/h, the temperature at the flue gas inlet is controlled at 700-800°C, it is observed that the temperature at the flue gas outlet is controlled at 350-450°C, and the temperature of pyrolysis reaction is 450-500°C. The residence time of the waste plastic in the pyrolysis reactor is 40 min.

When the temperature fluctuation at the flue gas outlet reaches 100°C, the operation of the pyrolysis system is stopped, and the pyrolysis reactor is checked.

The pyrolysis reactor is horizontal, with a length of 9 m and an inner diameter of 1.2 m Two stirring rods are arranged on the same section of the rotating shaft as a group, and an included angle between the stirring rod and the rotating shaft is 90 degrees. A total of 90 groups of stirring rods are arranged on the rotating shaft, and the rotating speed of the rotating shaft is 2 r/min.

Parameters of the scraping plate and counterweight on the stirring rod are as follows:

The weight w₁ of the scraping plate is equal to 7612 g, the weight w₂ of the counterweight is equal to 3806 g, the width m of the scraping plate is equal to 8 cm, and the distance L from the counterweight to the axis of rotation of the scraping plate is equal to 8 cm (satisfying the following relationship: (w₂×L+0.5w₁× 0.5m)/(0.5w₁× 0.5m) = 2-3).

The pyrolysis reactor generates a high-temperature pyrolysis gas and a pyrolysis solid, and the high-temperature pyrolysis gas is condensed and separated to obtain plastic pyrolysis oil and plastic pyrolysis gas, and the pyrolysis solid generated by pyrolysis reaction is discharged by a cooling screw conveyor.

After the pyrolysis system continuously operates for 28 days, and the fluctuation of the temperature at the flue gas outlet is summarized in the following Table 1.

**Table 1**

| Days | 1^{th} day | 5^{th} day | 10^{th} day | 15^{th} day | 20^{th} day | 25^{th} day | 30^{th} day | 40^{th} day | 50^{th} day | 55^{th} day | 60^{th} day | 65^{th} day |
|---|---|---|---|---|---|---|---|---|---|---|---|---|
| Temperature at flue gas outlet | 350 °C | 350 °C | 350 °C | 353 °C | 366 °C | 369 °C | 375 °C | 385 °C | 400 °C | 416 °C | 435 °C | 455 °C |

As can be seen from Table 1, when the pyrolysis system operates continuously for 10 days, the temperature at the flue gas outlet is always kept stable at 350°C, and no temperature fluctuation has been found. On the 15^{th} to 30^{th} day of operation, the temperature at the flue gas outlet fluctuates obviously, but the amplitude of fluctuation is within 30°C, and the temperature rises particularly slowly. On the 40^{th} day of operation, there is obvious temperature fluctuation. After continuous observation for 25 days, it is found that the temperature rises significantly. On the 65^{th} day, the temperature reaches 455°C, so the pyrolysis system is stopped in time to check the pyrolysis reactor. It is found that an average thickness of the attachments on the inner wall pyrolysis reactor is 1 mm.

The pyrolysis products (yield, weight%) obtained during the operation of the pyrolysis system are recorded and summarized in the following table 2.

**Table 2**

| Pyrolysis product | Yield of pyrolysis oil | Yield of pyrolysis gas | Yield of pyrolysis solid | Yield of water |
|---|---|---|---|---|
| 5^{th} day | 65% | 15% | 15% | 5% |
| 10^{th} day | 65% | 15% | 15% | 5% |
| 15^{th} day | 63% | 15% | 16% | 5% |
| 30^{th} day | 63% | 14% | 18% | 5% |
| 40^{th} day | 62% | 14% | 19% | 5% |
| 50^{th} day | 62% | 13% | 20% | 5% |
| 60^{th} day | 60% | 12% | 23% | 5% |
| 65^{th} day | 58% | 11% | 26% | 5% |

### Comparative example

The pyrolysis reactor of Embodiment 1 is replaced with a spiral reactor with the same size (as shown in FIG. 5), in which the materials in the reactor are stirred and propelled by a spiral stirring mechanism, the reactor has a length of 9 m, an inner diameter of 1.2 m, and a pitch of 15 cm. According to the process parameters the same as those in Embodiment 1, the pyrolysis system of the comparative example is in continuous operation. The temperature fluctuation at the flue gas outlet during operation is observed and summarized in the following table 5.

**Table 5**

| Days | 1^{st} day | 3^{rd} day | 5^{th} day | 7^{th} day | 10^{th} day | 15^{th} day | 20^{th} day |
|---|---|---|---|---|---|---|---|
| Temperature at flue gas outlet | 350°C | 365°C | 385°C | 430°C | 457°C | 487°C | 522°C |

On the 5^{th} day of operation, the temperature at the flue gas outlet of the pyrolysis system of the comparative example increases obviously, and reaches 457°C on the 10^{th} day and 522°C on the 20^{th} day. The pyrolysis system is stopped, and the spiral reactor is inspected, it is found that there is a thick black substance attached to the inner wall of the spiral reactor, and an average thickness of the attachment reaches 5mm, mainly a coking material.

The pyrolysis products obtained during the operation are recorded and summarized in the following table 6.

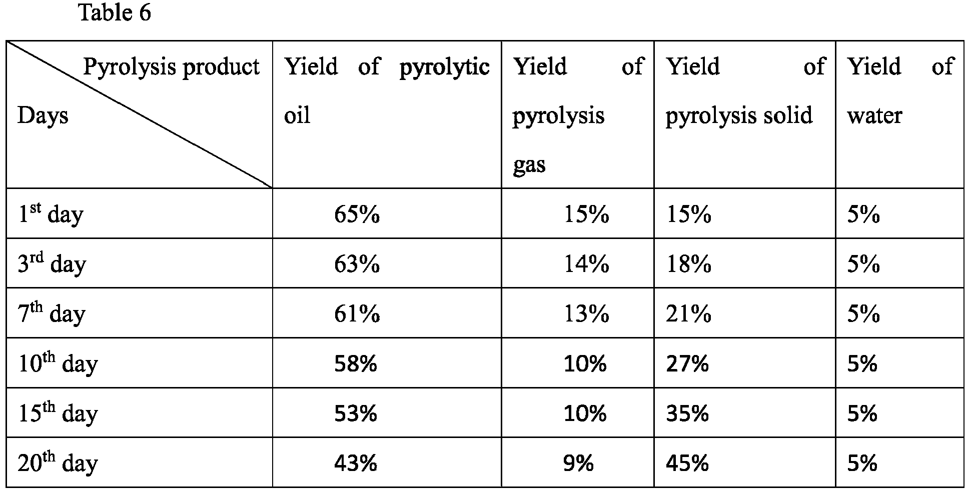

The above are the preferred embodiments of the present disclosure, and the scope of protection of the present disclosure is not limited accordingly.

## Claims

1. A pyrolysis system of waste plastic comprising a feeding unit, a pyrolysis unit for pyrolysis reaction, and a separation unit for pyrolysis product separation; the feeding unit, the pyrolysis unit and the separation unit are connected in turn; a discharge port of the feeding unit is hermetically connected to a feed port (11) of the pyrolysis unit, a pyrolysis product outlet (12) of the pyrolysis unit communicates with the separation unit, and the separation unit is used to separate pyrolysis oil and gas from a pyrolysis solid;
the pyrolysis unit comprises a pyrolysis reactor (1), and a flue gas channel arranged around an outer wall of the pyrolysis reactor (1), and the flue gas channel is used for circulating a hot flue gas, thus providing a heat source for the pyrolysis reactor (1);
the flue gas channel is provided with a flue gas inlet, and a flue gas outlet; the flue gas inlet is arranged on a feed port side of the pyrolysis reactor (1), and the flue gas outlet is arranged on a pyrolysis product outlet side of the pyrolysis reactor (1); the pyrolysis reactor (1) is configured to control a temperature at the flue gas inlet at 700-800°C, and a temperature at a flue gas outlet at 300-400°C, to ensure that the temperature of the pyrolysis reaction reaches 450-500°C, and
a stirring assembly is arranged in an inner cavity of the pyrolysis reactor, and the stirring assembly is in linear contact with an inner wall of the pyrolysis reactor (1) when rotating and stirring, thereby scraping attachments on the inner wall of the pyrolysis reactor (1)
wherein the stirring assembly comprises a rotating shaft (2), and a plurality of stirring rods (3) arranged on the rotating shaft (2), and the rotating shaft (2) is arranged on a central line of the pyrolysis reactor (1) along a length of the pyrolysis reactor (1);
one end of the stirring rod (3) is fixedly connected to the rotating shaft (2), the other end of the stirring rod (3) is connected to a scraping plate (4), and the scraping plate (4) is able to rotate at an end of the stirring rod (3); and
a shape of the scraping plate (4) is a long-strip plate, and both ends of the scraping plate (4) have different weights.

2. The pyrolysis system according to claim 1, wherein an included angle between the stirring rod (3) and the rotating shaft (2) is 30-90 degrees.

3. The pyrolysis system according to claim 1, wherein on the rotating shaft (2), a vertical distance between two adjacent stirring rods (3) on the rotating shaft (2) is 1.5-3 times a length of the scraping plate (4).

4. The pyrolysis system according to claim 1, wherein the pyrolysis system comprises two or more stages of pyrolysis units, two adjacent stages of pyrolysis units are in closed communication, and the separation unit communicates with the last stage of pyrolysis unit.

5. The pyrolysis system according to claim 4, wherein each stage of pyrolysis unit is provided with an independent flue gas channel, and the flue gas channels of two adjacent stages of pyrolysis units are in communication.

6. A continuous pyrolysis method of waste plastic implemented by the pyrolysis system of any one of claims 1 to 5, comprising the following steps:
crushing and drying the waste plastic, and then carrying out pyrolysis reaction in a pyrolysis reactor (1) under an oxygen-free condition to obtain pyrolysis products, wherein the stirring assembly is in linear contact with an inner wall of the pyrolysis reactor (1) when rotating and stirring and wherein the pyrolysis products comprise pyrolysis oil and gas, and a pyrolysis solid; scraping attachments on the inner wall of the pyrolysis reactor (1) by means of the stirring assembly whereby a temperature of the pyrolysis reaction remains in the range of 450-500°C for more than 10 days, pyrolysis reaction time is controlled at 30-40 min, and a proportion of the pyrolysis solid in the pyrolysis products is less than 20% by weight.

7. The continuous pyrolysis method of waste plastic according to claim 6, wherein the temperature of the pyrolysis reaction remains stable
in the range of 450-500°C for more than 20 days.

8. The continuous pyrolysis method of waste plastic according to claim 6, wherein the temperature of the pyrolysis reaction remains stable
in the range of 450-500°C for more than 60 days.

9. The continuous pyrolysis method of waste plastic according to claim 6, wherein a moisture content of the waste plastic after drying is less than 5% by weight.

## Patentansprüche

1. Pyrolysesystem für Kunststoffabfälle, umfassend eine Zuführeinheit, eine Pyrolyseeinheit für die Pyrolysereaktion und eine Trenneinheit zur Pyrolyseprodukttrennung, wobei die Zuführeinheit, die Pyrolyseeinheit und die Trenneinheit nacheinander verbunden sind, wobei eine Austrittsöffnung der Zuführeinheit hermetisch mit einer Zuführöffnung (11) der Pyrolyseeinheit verbunden ist, ein Pyrolyseproduktauslass (12) der Pyrolyseeinheit mit der Trenneinheit kommuniziert und die Trenneinheit verwendet wird, um Pyrolyseöl und -gas von einem Pyrolysefeststoff zu trennen,
wobei die Pyrolyseeinheit einen Pyrolysereaktor (1) und einen um eine Außenwand des Pyrolysereaktors (1) herum angeordneten Rauchgaskanal umfasst und der Rauchgaskanal zur Zirkulation eines heißen Rauchgases verwendet wird und somit eine Wärmequelle für den Pyrolysereaktor (1) bereitstellt,
wobei der Rauchgaskanal mit einem Rauchgaseinlass und einem Rauchgasauslass versehen ist, der Rauchgaseinlass auf einer Zuführöffnungsseite des Pyrolysereaktors (1) angeordnet ist und der Rauchgasauslass ist auf einer Pyrolyseproduktauslassseite des Pyrolysereaktors (1) angeordnet ist, wobei der Pyrolysereaktor (1) ausgelegt ist, eine Temperatur an dem Rauchgaseinlass auf 700-800 °C zu regeln und eine Temperatur an dem Rauchgasauslass auf 300-400 °C zu regeln, um sicherzustellen, dass die Temperatur der Pyrolysereaktion 450-500 °C erreicht, und
wobei eine Rühranordnung in einem inneren Hohlraum des Pyrolysereaktors angeordnet ist und die Rühranordnung beim Drehen und Rühren in linearem Kontakt mit einer Innenwand des Pyrolysereaktors (1) ist und dadurch Anhaftungen an der Innenwand des Pyrolysereaktors (1) abstreift,
wobei die Rühranordnung eine rotierende Welle (2) und eine Vielzahl von Rührstäben (3), die an der rotierenden Welle (2) angeordnet sind, umfasst und die rotierende Welle (2) auf einer Mittellinie des Pyrolysereaktors (1) entlang einer Länge des Pyrolyseraktors (1) angeordnet ist,
wobei ein Ende des Rührstabs (3) fest mit der rotierenden Welle (2) verbunden ist, das andere Ende des Rührstabs (3) mit einer Abstreifplatte (4) verbunden ist und die Abstreifplatte (4) in der Lage ist, sich an einem Ende des Rührstabs (3) zu drehen, und
wobei eine Form der Abstreifplatte (4) die eines langgestreckten Streifens ist und beide Enden der Abstreifplatte (4) unterschiedliche Gewichte aufweisen.

2. Pyrolysesystem nach Anspruch 1, wobei ein eingeschlossener Winkel zwischen dem Rührstab (3) und der rotierenden Welle (2) 30-90 Grad beträgt.

3. Pyrolysesystem nach Anspruch 1, wobei auf der rotierenden Welle (2) ein vertikaler Abstand zwischen zwei benachbarten Rührstäben (3) auf der rotierenden Welle (2) das 1,5-3-Fache einer Länge der Abstreifplatte (4) beträgt.

4. Pyrolysesystem nach Anspruch 1, wobei das Pyrolysesystem zwei oder mehr Prolyseeinheitsstufen umfasst, zwei benachbarte Prolyseeinheitsstufen in geschlossener Kommunikation stehen und die Trenneinheit mit der letzten Prolyseeinheitsstufe kommuniziert.

5. Pyrolysesystem nach Anspruch 4, wobei jede Prolyseeinheitsstufe mit einem unabhängigen Rauchgaskanal versehen ist und die Rauchgaskanäle zweier benachbarter Prolyseeinheitsstufen in Kommunikation stehen.

6. Kontinuierliches Pyrolyseverfahren für Kunststoffabfälle, das durch das Pyrolysesystem nach einem der Ansprüche 1 bis 5 umgesetzt wird und die folgenden Schritte umfasst:
Zerkleinern und Trocknen der Kunststoffabfälle und anschließendes Durchführen einer Pyrolysereaktion in einem Pyrolysereaktor (1) unter sauerstofffreien Bedingungen, um Pyrolyseprodukte zu erhalten, wobei die Rühranordnung beim Drehen und Rühren in linearem Kontakt mit einer Innenwand des Pyrolysereaktors (1) ist, und wobei die Pyrolyseprodukte Pyrolyseöl und -gas und einen Pyrolysefeststoff umfassen; Abstreifen von Anhaftungen an der Innenwand des Pyrolysereaktors (1) mittels der Rühranordnung, wodurch eine Temperatur der Pyrolysereaktion mehr als 10 Tage lang im Bereich von 450-500 °C bleibt, die Pyrolysereaktionszeit auf 30-40 min geregelt ist und eine Proportion des Pyrolysefeststoffs in den Pyrolyseprodukten weniger als 20 Gew.-% beträgt.

7. Kontinuierliches Pyrolyseverfahren für Kunststoffabfälle nach Anspruch 6, wobei die Temperatur der Pyrolysereaktion mehr als 20 Tage lang stabil im Bereich von 450-500 °C bleibt.

8. Kontinuierliches Pyrolyseverfahren für Kunststoffabfälle nach Anspruch 6, wobei die Temperatur der Pyrolysereaktion mehr als 60 Tage lang stabil im Bereich von 450-500 °C bleibt.

9. Kontinuierliches Pyrolyseverfahren für Kunststoffabfälle nach Anspruch 6, wobei ein Feuchtigkeitsgehalt der Kunststoffabfälle nach dem Trocken weniger als 5 Gew.-% beträgt.

## Revendications

1. Système de pyrolyse de déchets plastiques comprenant une unité d'alimentation, une unité de pyrolyse destinée à la réaction de pyrolyse et une unité de séparation destinée à la séparation de produits de pyrolyse ; l'unité d'alimentation, l'unité de pyrolyse et l'unité de séparation sont reliées les unes aux autres ; un orifice de décharge de l'unité d'alimentation est relié de manière hermétique à un orifice d'alimentation (11) de l'unité de pyrolyse, une sortie de produits de pyrolyse (12) de l'unité de pyrolyse communique avec l'unité de séparation, et l'unité de séparation est utilisée pour séparer l'huile et le gaz de pyrolyse d'un solide de pyrolyse ;
l'unité de pyrolyse comprend un réacteur de pyrolyse (1) et un canal de gaz de combustion disposé autour d'une paroi extérieure du réacteur de pyrolyse (1), et le canal de gaz de combustion est utilisé pour faire circuler des gaz de combustion chauds, fournissant ainsi une source de chaleur au réacteur de pyrolyse (1) ;
le canal de gaz de combustion est pourvu d'une entrée de gaz de combustion et d'une sortie de gaz de combustion ; l'entrée de gaz de combustion est disposée du côté de l'orifice d'alimentation du réacteur de pyrolyse (1), et la sortie de gaz de combustion est disposée du côté de la sortie des produits de pyrolyse du réacteur de pyrolyse (1) ; le réacteur de pyrolyse (1) est configuré pour maintenir la température à l'entrée des gaz de combustion à 700-800 °C, et la température à la sortie des gaz de combustion à 300-400 °C, afin de garantir que la température de la réaction de pyrolyse atteigne 450-500 °C, et
un ensemble d'agitation est disposé dans une cavité intérieure du réacteur de pyrolyse, et l'ensemble d'agitation est en contact linéaire avec une paroi intérieure du réacteur de pyrolyse (1) lors de la rotation et de l'agitation, raclant ainsi les dépôts présents sur la paroi intérieure du réacteur de pyrolyse (1)
l'ensemble d'agitation comprenant un arbre rotatif (2) et une pluralité de tiges d'agitation (3) disposées sur l'arbre rotatif (2), et l'arbre rotatif (2) étant disposé sur la ligne centrale du réacteur de pyrolyse (1) sur la longueur du réacteur de pyrolyse (1) ;
une extrémité de la tige d'agitation (3) étant reliée de manière fixe à l'arbre rotatif (2), l'autre extrémité de la tige d'agitation (3) étant reliée à une plaque de raclage (4), et la plaque de raclage (4) pouvant tourner à une extrémité de la tige d'agitation (3) ; et
la plaque de raclage (4) se présentant comme une plaque en forme de bande allongée, et les deux extrémités de la plaque de raclage (4) ayant des poids différents.

2. Système de pyrolyse selon la revendication 1, l'angle inclus entre la tige d'agitation (3) et l'arbre rotatif (2) étant de 30-90 degrés.

3. Système de pyrolyse selon la revendication 1, dans lequel, sur l'arbre rotatif (2), la distance verticale entre deux tiges d'agitation adjacentes (3) situées sur l'arbre rotatif (2) est comprise entre 1,5 et 3 fois la longueur de la plaque de raclage (4).

4. Système de pyrolyse selon la revendication 1, **caractérisé en ce que** le système de pyrolyse comprend au moins deux étages d'unités de pyrolyse, deux étages adjacents d'unités de pyrolyse sont en communication fermée, et l'unité de séparation communique avec le dernier étage d'unité de pyrolyse.

5. Système de pyrolyse selon la revendication 4, chaque étage de l'unité de pyrolyse étant pourvu d'un canal de gaz de combustion indépendant, et les canaux de gaz de combustion de deux étages adjacents des unités de pyrolyse communiquant entre eux.

6. Procédé de pyrolyse en continu de déchets plastiques mis en œuvre par le système de pyrolyse selon l'une quelconque des revendications 1 à 5, comprenant les étapes suivantes :
le broyage et le séchage des déchets plastiques, puis la réalisation d'une réaction de pyrolyse dans un réacteur de pyrolyse (1) dans des conditions d'absence d'oxygène afin d'obtenir des produits de pyrolyse, l'ensemble d'agitation étant en contact linéaire avec une paroi intérieure du réacteur de pyrolyse (1) lors de la rotation et de l'agitation, et les produits de pyrolyse comprenant de l'huile et du gaz de pyrolyse, ainsi qu'un solide de pyrolyse ; le raclage des dépôts sur la paroi interne du réacteur de pyrolyse (1) au moyen de l'ensemble d'agitation, de sorte que la température de la réaction de pyrolyse reste comprise entre 450 et 500 °C pendant plus de 10 jours, la durée de la réaction de pyrolyse est contrôlée entre 30 et 40 minutes, et la proportion de solide de pyrolyse dans les produits de pyrolyse est inférieure à 20 % en poids.

7. Procédé de pyrolyse en continu de déchets plastiques selon la revendication 6, la température de la réaction de pyrolyse restant stable entre 450 et 500 °C pendant plus de 20 jours.

8. Procédé de pyrolyse en continu de déchets plastiques selon la revendication 6, la température de la réaction de pyrolyse restant stable entre 450 et 500 °C pendant plus de 60 jours.

9. Procédé de pyrolyse en continu de déchets plastiques selon la revendication 6, la teneur en humidité des déchets plastiques après séchage étant inférieure à 5 % en poids.
